(19) Europäisches Patentamt

European Patent Office

Office européen des brevets

(11) **EP 1 414 177 A1**

(12) **EUROPEAN PATENT APPLICATION**

(43) Date of publication:
28.04.2004 Bulletin 2004/18

(51) Int Cl.⁷: **H04L 1/06**, H04L 25/02,
H04L 27/26

(21) Application number: 03255881.9

(22) Date of filing: 19.09.2003

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: 26.09.2002  GB 0222410

(71) Applicant: **Kabushiki Kaisha Toshiba
Tokyo 105-8001 (JP)**

(72) Inventors:
• **Sandell, Magnus**
  **c/o Toshiba Research Europe Ltd.**
  **Bristol BS1 4ND (GB)**
• **Sun, Yong, c/o Toshiba research Europe Ltd**
  **Bristol BS1 4ND (GB)**

(74) Representative: **Midgley, Jonathan Lee**
**Marks & Clerk**
**57-60 Lincoln's Inn Fields**
**GB-London WC2A 3LS (GB)**

(54) **Channel estimation for OFDM using orthogonal training sequences**

(57)  This invention relates to apparatus, methods, processor control code and signals for channel estimation in OFDM (Orthogonal Frequency Division Multiplexed) communication systems with a plurality of transmitter antennas, such as MIMO (Multiple-input Multiple-output) OFDM systems.

An OFDM signal is transmitted from an OFDM transmitter using a plurality of transmit antennas. The OFDM signal is adapted for channel estimation for channels associated with said transmit antennas by the inclusion of orthogonal training sequence data in the signal from each said antenna. The said training sequence data is derived from substantially orthogonal training sequences of length K for each said transmit antenna, said orthogonal training sequences being constructed such that a minimum required sequence length K needed to determine a channel estimate for at least one channel associated with each said transmit antenna is linearly dependent upon the number of said transmit antennas.

Figure 5

## Description

This invention relates to apparatus, methods, processor control code and signals for channel estimation in OFDM (Orthogonal Frequency Division Multiplexed) communication systems. More particularly it relates to channel estimation in systems with a plurality of transmitter antennas, such as MIMO (Multiple-input Multiple-output) OFDM systems.

The current generation of high data rate wireless local area network (WLAN) standards, such as Hiperlan/2 and IEEE802.11a, provide data rates of up to 54 Mbit/s. However, the ever-increasing demand for even higher data rate services, such as Internet, video and multi-media, have created a need for improved bandwidth efficiency from next generation wireless LANs. The current IEEE802.11a standard employs the bandwidth efficient scheme of Orthogonal Frequency Division Multiplex (OFDM) and adaptive modulation and demodulation. The systems were designed as single-input single-output (SISO) systems, essentially employing a single transmit and receive antenna at each end of the link. However within ETSI BRAN some provision for multiple antennas or sectorised antennas has been investigated for improved diversity gain and thus link robustness.

Hiperlan/2 is a European standard for a 54Mbps wireless network with security features, operating in the 5GHz band. IEEE 802.11 and, in particular, IEEE 802.11a, is a US standard defining a different networking architecture, but also using the 5GHz band and providing data rates of up to 54Mbps. The Hiperlan (High Performance Radio Local Area Network) type 2 standard is defined by a Data Link Control (DLC) Layer comprising basic data transport functions and a Radio Link Control (RLC) sublayer, a Packet based Convergence Layer comprising a common part definition and an Ethernet Service Specific Convergence Sublayer, a physical layer definition and a network management definition. For further details of Hiperlan/2 reference may be made to the following documents, which are hereby incorporated by reference: ETSI TS 101 761-1 (V1.3.1): "Broadband Radio Access Networks (BRAN); HIPERLAN Type 2; Data Link Control (DLC) Layer; Part 1: Basic Data Transport Functions"; ETSI TS 101 761-2 (V1.2.1): "Broadband Radio Access Networks (BRAN); HIPERLAN Type 2; Data Link Control (DLC) Layer; Part 2: Radio Link Control (RLC) sublayer"; ETSI TS 101 493-1 (V1.1.1): "Broadband Radio Access Networks (BRAN); HIPERLAN Type 2; Packet based Convergence Layer; Part 1: Common Part"; ETSI TS 101 493-2 (V1.2.1): "Broadband Radio Access Networks (BRAN); HIPERLAN Type 2; Packet based Convergence Layer; Part 2: Ethernet Service Specific Convergence Sublayer (SSCS)"; ETSI TS 101 475 (V1.2.2): "Broadband Radio Access Networks (BRAN); HIPERLAN Type 2; Physical (PHY) layer"; ETSI TS 101 762 (V1.1.1): "Broadband Radio Access Networks (BRAN); HIPERLAN Type 2; Network Management". These documents are available from the ETSI website at www.etsi.org.

A typical wireless LAN (Local Area Network) based on the Hiperlan/2 system. comprises a plurality of mobile terminals (MT) each in radio communication with an access point (AP) or base station of the network. The access points are also in communication with a central controller (CC) which in turn may have a link to other networks, for example a fixed Ethernet-type local area network. In some instances, for example in a Hiperlan/2 network where there is no local access point, one of the mobile terminals may take the role of an access point/central controller to allow a direct MT to MT link. However in this specification references to "mobile terminal" and "access point" should not be taken to imply any limitation to the Hiperlan/2 system or to any particular form of access point (or base station) or mobile terminal.

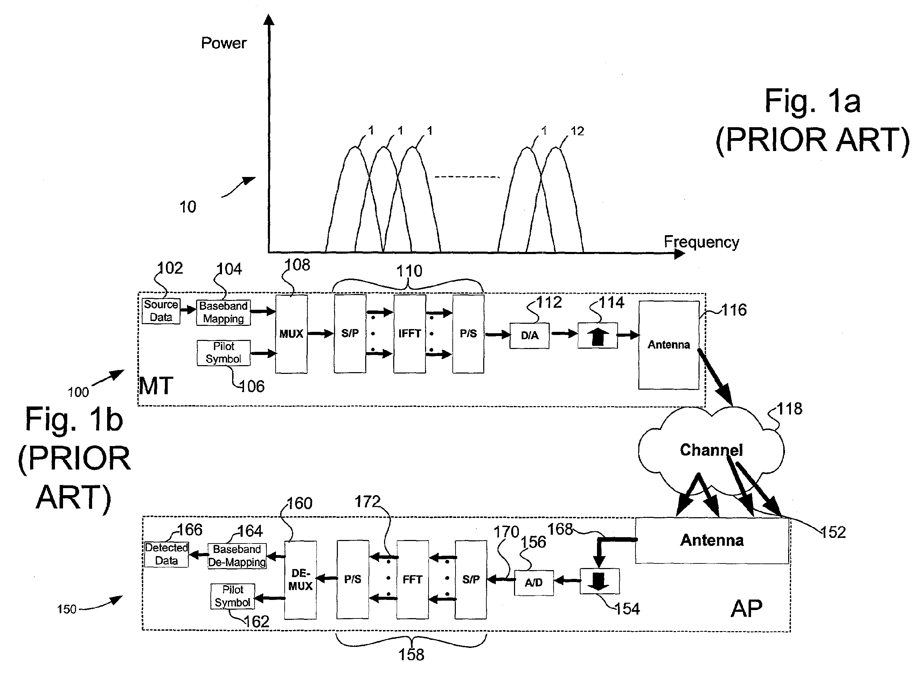

Orthogonal frequency division multiplexing is a well-known technique for transmitting high bit rate digital data signals. Rather than modulate a single carrier with the high speed data, the data is divided into a number of lower data rate channels each of which is transmitted on a separate subcarrier. In this way the effect of multipath fading is mitigated. In an OFDM signal the separate subcarriers are spaced so that they overlap, as shown for subcarriers 12 in spectrum 10 of Figure 1a. The subcarrier frequencies are chosen that so that the subcarriers are mutually orthogonal, so that the separate signals modulated onto the subcarriers can be recovered at the receiver. One OFDM symbol is defined by a set of symbols, one modulated onto each subcarrier (and therefore corresponds to a plurality of data bits). The subcarriers are orthogonal if they are spaced apart in frequency by an interval of 1/T, where T is the OFDM symbol period.

An OFDM symbol can be obtained by performing an inverse Fourier transform, preferably an Inverse Fast Fourier Transform (IFFT), on a set of input symbols. The input symbols can be recovered by performing a Fourier transform, preferably a fast Fourier transform (FFT), on the OFDM symbol. The FFT effectively multiplies the OFDM symbol by each subcarrier and integrates over the symbol period T. It can be seen that for a given subcarrier only one subcarrier from the OFDM symbol is extracted by this procedure, as the overlap with the other subcarriers of the OFDM symbol will average to zero over the integration period T.

Often the subcarriers are modulated by QAM (Quadrature Amplitude Modulation) symbols, but other forms of modulation such as Phase Shift Keying (PSK) or Pulse Amplitude Modulation (PAM) can also be used. To reduce the effects of multipath OFDM symbols are normally extended by a guard period at the start of each symbol. Provided that the relatively delay of two multipath components is smaller than this guard time interval there is no inter-symbol interference (ISI), at least to a first approximation.

Figure 1b shows an example of a conventional SISO (single-input, single-output) OFDM system including a transmitter 100 (here in a mobile terminal, MT) receiver 150 (here in an access point, AP). In the transmitter 100 a source 102 provides data to a baseband mapping unit 104, which optionally provides forward error correction coding and interleaving, and which outputs modulated symbols such as QAM symbols. The modulated symbols are provided to a multiplexer 108 which combines them with pilot symbols from a pilot symbol generator 106, which provides reference amplitudes and phases for frequency synchronisation and coherent detection in the receiver and known (pilot) data for channel estimation. The combination of blocks 110 converts the serial data stream from multiplexer 108 to a plurality of parallel, reduced data rate streams, performs an IFFT on these data streams to provide an OFDM symbol, and then converts the multiple subcarriers of this OFDM symbol to a single serial data stream. This serial (digital) data stream is then converted to an analogue time-domain signal by digital-to-analogue converter 112, up-converted by up-converter 114, and after filtering and amplification (not shown) output from an antenna 116, which may comprise an omnidirectional antenna, a sectorised antenna or an array antenna with beamforming.

In more detail, a series of modulation data symbols such as QAM symbols, is arranged as a vector, optionally padded with zeros to introduce oversampling. This (column) vector is then multiplied by an inverse discrete Fourier transform (IDFT) matrix to provide an output (column) vector comprising a set of values which when passed to a digital-to-analogue converter, one at a time, will define a waveform which effectively comprises a set of orthogonal carriers modulated by the modulation symbols, this being termed an OFDM symbol. In practice (although not shown explicitly in Figure 1b) a cyclic extension such as a cyclic prefix is added in the time domain, for example by copying some of the final samples of the IDFT output to the start of the OFDM symbol. This cyclic prefix extends the OFDM symbol (the symbol may be extended at either end) to provide a guard time which effectively eliminates inter-symbol interference for multipaths delays of less than this guard time. (When decoding the FFT integration time does not begin until after the cyclic prefix guard time). Windowing may also be applied (in the time domain) to reduce the power of out-of-band subcarriers.

The signal from antenna 116 of transmitter 100 is received by an antenna 152 of receiver 150 via a "channel" 118. Typically the signal arrives at antenna 152 as a plurality of multipath components, with a plurality of different amplitudes and phases, which have propagated via a plurality of different channels or paths. These multipath components combine at the receiver and interfere with one another to provide an overall channel characteristic typically having a number of deep nulls, rather like a comb, which generally change with time (particularly where the transmitter or receiver is moving). This is discussed in more detail later.

A particular problem arises where transmit diversity is employed, that is where more than one transmit antenna is used, for example in a MIMO (Multiple-Input Multiple-Output) OFDM communication system, where the "input" (to a matrix channel) is provided by a plurality of transmit antennas and the "output" (from a matrix channel) is provided by a plurality of receive antennas. In such a communication system, the signals from different transmit antennas may interfere with one another causing decoding difficulties.

The antenna 152 of receiver 150 is coupled to a down-converter 154 and to an analogue-to-digital converter 156. Blocks 158 then perform a serial-to-parallel conversion, FFT, and parallel-to-serial re-conversion, providing an output to demultiplexer 160, which separates the pilot symbol signal 162 from the data symbols. The data symbols then demodulated and de-mapped by base-band de-mapping unit 164 to provide a detected data output 166. Broadly speaking the receiver 150 is a mirror image of the transmitter 100. The transmitter and receiver may be combined to form an OFDM transceiver.

OFDM techniques may be employed in a variety of applications and are used, for example, for military communication systems and high definition TV as well as Hiperlan/2 (www.etsi.org/technicalactiv/hiperlan2.htm, and DTS/BRAN-0023003v 0.k).

The receiver of Figure 1b is somewhat simplified as, in practice, there is a need to synchronise the FFT window to each OFDM symbol in turn, to avoid introducing non-orthogonality and hence ISI/ICI (Inter-Symbol Interference/Inter-Carrier Interference). This may be done by auto-correlating an OFDM symbol with the cyclic extension of the symbol in the guard period but it is generally preferable, particularly for packet data transmission, to use known OFDM symbols which the receiver can accurately identify and locate, for example using a matched filter.

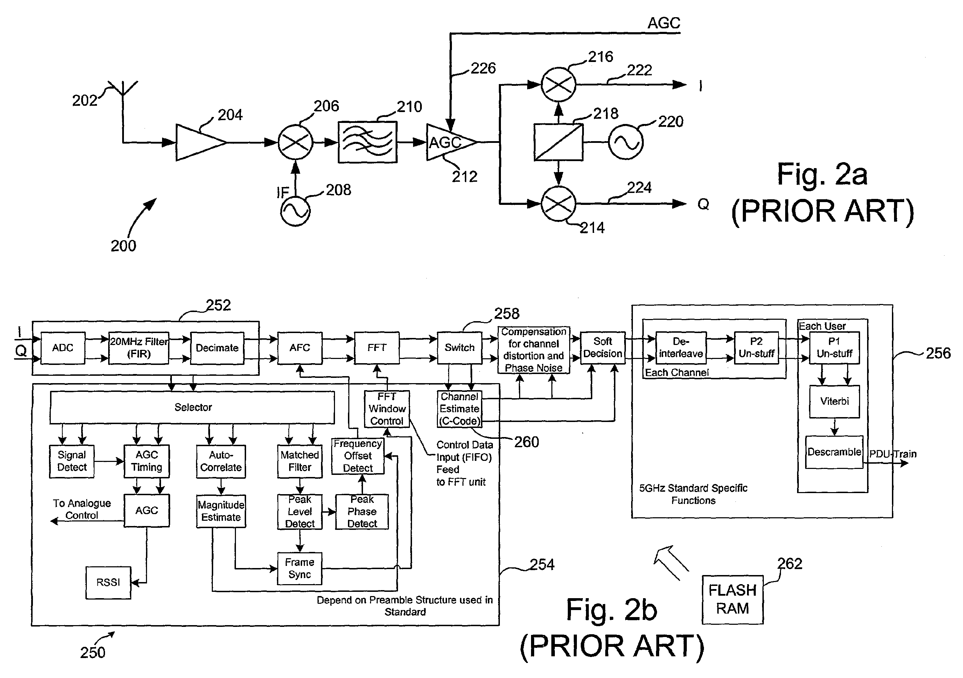

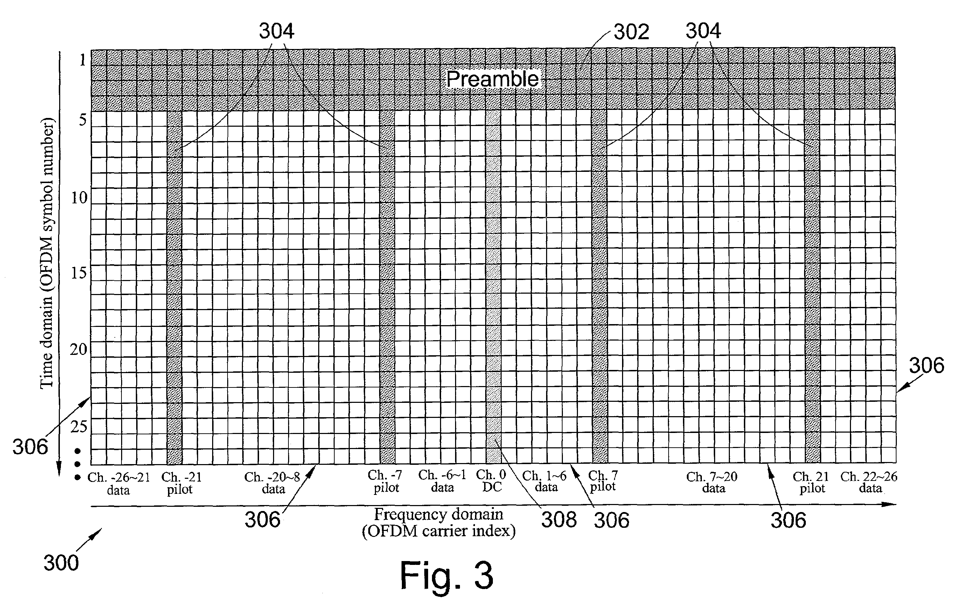

Figures 2a and 2b show, respectively, a receiver front end 200 and receiver signal processing blocks 250 of a conventional HIPERLAN 2 mobile terminal (MT) OFDM receiver. The receiver 250 shows some details of the analogue-to-digital conversion circuitry 252, the synchronisation, channel estimation and control circuitry 252 and the de-packetising, de-interleaving and error correcting circuitry 256.

The front end 200 comprises a receive antenna 202 coupled to an input amplifier 204 and a mixer 206, which has a second input from an IF oscillator 208 to mix the RF signal to IF. The IF signal is then provided to an automatic Automatic Gain Control (AGC) amplifier 212 via a band pass filter 210, the AGC stage being controlled by a line 226 from control circuitry 254, to optimise later signal quantisation. The output of AGC 212 provides an input to two mixers 214, 216, which are also provided with quadrature signals from an oscillator 220 and splitter 218 to generate quadrature I and Q signals 222, 224. These I and Q signals are then over-sampled, filtered and decimated by analogue-to-digital circuitry 252. The over-sampling of the signal aids the digital filtering, after which the signal is rate reduced to the desired sample rate.

In Figure 1b and 2b, FFT and IFFT operations may be implemented at least partially in software, as schematically illustrated by Flash RAM 262, for example using one or more digital signal processors (DSPs) and/or one or more ASICs or FPGAs. The exact point at which the signal is digitised in a software radio will generally depend upon a cost/complexity/power consumption trade-off, as well as upon the availability of suitable high speed analogue/digital converters and processor.

A known symbol, for example in preamble data or one or more pilot signals may be used for channel estimation, to compensate for the effects of a transmission channel.

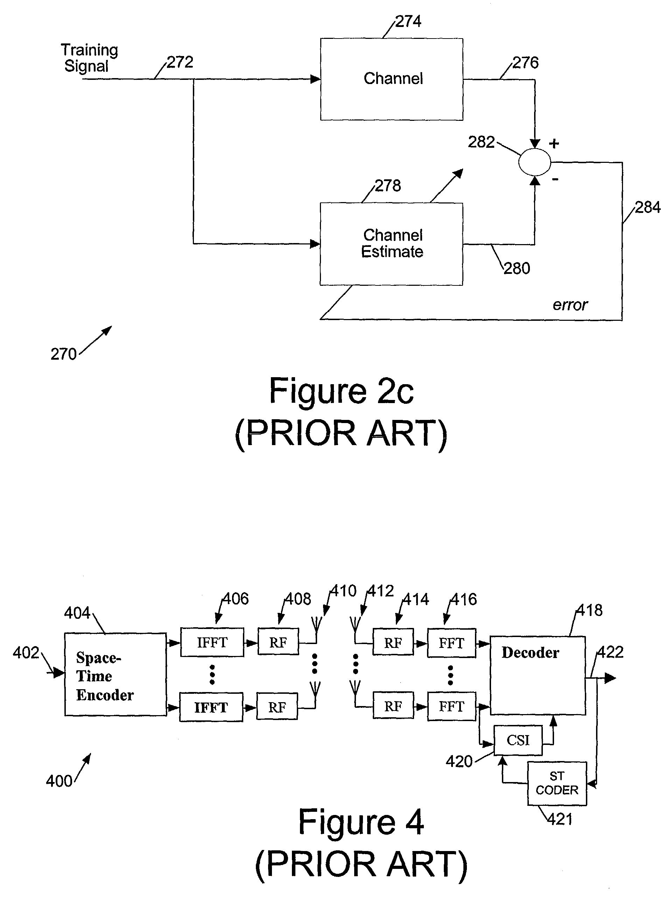

Figure 2c shows a block diagram illustrating the basic concept of one type of channel estimation procedure 270. Embodiments of the invention to be described later are not limited to use with this technique and may be used with other conventional channel estimation techniques, for example Maximum Likelihood Sequence Estimation (MLSE) in which a most probable received sequence is chosen from a set of all possible received sequences. The procedure aims to modify the coefficients of an adaptive digital filter, labelled as "channel estimate" 278 in Figure 2c, so that the behaviour of the filter matches, as closely as possible, the behaviour of a transmission channel 274 being modelled.

A known training signal 272 is applied both to the transmission channel 274 to be modelled and to the adaptive filter 278 providing the channel estimate. The received version of the training signal corresponds to the output 276 from channel 274 and reflects the impulse response of the channel 204. The output 280 from channel estimate adaptive filter 278 comprises the estimated response of the channel, and this is subtracted from the actual response in subtracter 282 to create an error signal 284 which is fed back to the adaptive channel estimate filter 278 to update the coefficients of the filter according to an adaption algorithm.

Any one of many suitable conventional algorithms may be employed, such as a Recursive Least Square (RLS) or Least Mean Square (LMS) algorithm or a variant thereof. Such algorithms will be well-known to the skilled person but, for completeness, an outline description of the LMS algorithm will also be given; reference may also be made to Lee and Messerschmitt, "Digital Communication", Kluwer Academic Publishers, 1994.

Consider an input u(n) where n labels the number or step of an input sample, buffered into an input vector $\mathbf{u}(n)$, a desired filter response d(n), and a vector of estimated filter tap weights $\mathbf{w}(n)$. The output of the filter is given by

$$y(n) = w^{H}(n) \, u(n)$$

where $\mathbf{w}^{H}$ denotes the Hermitian conjugate of $\mathbf{w}$. Then, according to the LMS algorithm, an improved weight estimation is given by

$$w(n+1) = w(n) + \mu \, u(n)[d^{*}(n) - y^{*}(n)]$$

where * denotes a complex conjugate and $\mu$ is the adaption step size of the algorithm. Convergence of the algorithm can be determined using the mean squared error, that is

$$|d(n) - y(n)|^{2}$$

which tends to a constant value or 0 as n tends to infinity. In Figure 2c the training signal 272 corresponds to u(n), the received signal 276 to d(n), and the output 280 of channel estimate adaptive filter 278 to y(n).

In the receiver 250 of Figure 2b a known preamble symbol, referred to as the "C symbol", is used to determine a channel estimate. The receiver synchronises to the received signal and switch 258 is operated to pass the received C symbol to channel estimator 260. This estimates the effect of the channel (amplitude change and phase shift of the symbols in the sub-carriers) on the known C symbol so that the effects of the channel can be compensated for, by multiplying by the reciprocal (or complex conjugate) of the channel response. Alternatively the one or more pilot signals (which also contain known symbols) can be used to determine a channel estimate. Again the phase rotation and amplitude change required to transform the received pilot into the expected symbol can be determined and applied to other received symbols. Where more than one pilot is available at more than one frequency improved channel compensation estimates can be obtained by interpolation/extrapolation to other frequencies using the different frequency pilot signals.

Figure 3 shows a plot 300 in the frequency and time domain illustrating the relative positions of preamble sequences 302, pilot signals 304, and data signals 306 for HIPERLAN 2, which has 48 data sub-carriers and 4 pilots (and one unused, central carrier channel 308). As can be seen from Figure 3 the first four OFDM symbols comprise preamble data, and the pilot signals 304 continue to carry their preamble symbols. However on the remaining (data-bearing) sub-carriers OFDM symbols 5 onwards carry data. In other OFDM schemes similar plots can be drawn, although the preamble and pilot positions may vary (for example, the pilots need not necessarily comprise continuous signals).

The skilled person will appreciate that in general in wireless LAN packet data communications systems packet lengths are short enough to assume a substantially constant channel over the duration of a packet. For this reason the preamble pilot data 302 can be used for training symbols to obtain channel estimates which may be assumed to be substantially constant until the next packet. The four continuous pilot sub-carriers may be used for frequency synchronisation. However in other types of OFDM communication system, such as digital audio or video broadcasting, other channel estimation techniques may be required. For example known pilot values for channel estimation may be inserted at intervals in both time (i.e. every few OFDM symbols) and frequency (i.e. on a subset of the subcarriers) and two-dimensional interpolation used to obtain channel estimates for the complete time and frequency space (i.e. for all the subcarriers and for successive OFDM symbols). Such interpolation techniques are well established in the art.

Until recently considerable effort was put into designing systems so as to mitigate for the perceived detrimental effects of multipath propagation, especially prevalent in indoor wireless LAN environments. However it has been recognised (see, for example, G.J. Foschini and M.J. Gans, "On limits of wireless communications in a fading environment when using multiple antennas" *Wireless Personal Communications* vol. 6, no.3, pp.311-335, 1998) that by utilising multiple antenna architectures at both the transmitter and receiver, so-called multiple-input multiple-output (MIMO) architectures, much increased channel capacities are possible. Attention has also turned to the use of space-time coding techniques (a generalisation of trellis coded modulation, with redundancy in the space domain) in OFDM-based systems. This is described in Y Li, N. Seshadri & S. Ariyavisitakul, "Channel Estimation for OFDM Systems with Transmitter Diversity in Mobile Wireless Channels", IEEE JSAC, Vol. 17, No. 3, 1999. Li et al. are particularly concerned with the estimation of channel state or parameter information (CSI), typically acquired via training sequences such as the Hiperlan/2 and IEEE802.11a.

Figure 4 shows a space-time coded MIMO-OFDM communications system 400 similar to that discussed by Li et al. A block of input data 402 b[n,k] at transmission time (or OFDM symbol or frame) n, k labelling elements of the block, is processed by a coding machine 404 which performs a space-time encoding operation. The input data may already been forward error corrected for example by a block encoder. The space-time (ST) encoder 404 provides a plurality of output signal blocks $t_i[n,k]$ (Li et al consider a two transmit antenna case, i=1,2) for driving a plurality of IFFT (Inverse Fast Fourier Transform) blocks 406, which in turn drive corresponding rf stages 408 and transmit antennas 410. The IFFT blocks 406 are configured to add a cyclic prefix to the transmitted OFDM symbols, in the time domain. A plurality of pilot signals for channel estimation and frequency synchronisation and phase tracking is also inserted (not shown in Figure 4).

In the corresponding receiver a plurality of receive antennas 412 provide inputs to rf front ends 414, which in turn drive respective FFT (Fast Fourier Transform) blocks 416 each providing an input Rx[n,k], to a space-time decoder 418. Channel information is determined from the outputs of FFT blocks 416 and from estimates of $t_i[n,k]$ provided by ST encoder 421, by CSI (channel parameter estimator) block 420, and this information is provided to the decoder 418. Decoder 418 provides an output 422 comprising an estimate of the data sequence on input 402 of the transmitter.

The arrangement of Figure 4 effectively provides a set of parallel OFDM transmitters each transmitting a coded sequence of data derived from a codeword produced by the encoder 404. Broadly speaking the encoder 404 and IFFT blocks 406 of Figure 4 accept a string of length *l* of modulation symbols, as might be applied to a single OFDM transmitter, and produce a set of $N_T$ of OFDM symbols, where $N_T$ is the number of transmit antennas, each of the same length *l*.

The skilled person will appreciate that although OFDM systems such as the transmitter and receiver of Figure 4 (and embodiments of the invention discussed later) are, for convenience, generally drawn in block diagram form in practice elements of these transmitters and receivers other than rf blocks 408 and 414 are likely to be implemented in software, for example on a digital signal processor, or may be specified in software by a design engineer using, for example, a hardware description language such as VHDL, the precise hardware implementation then being determined by the hardware description language compiler.

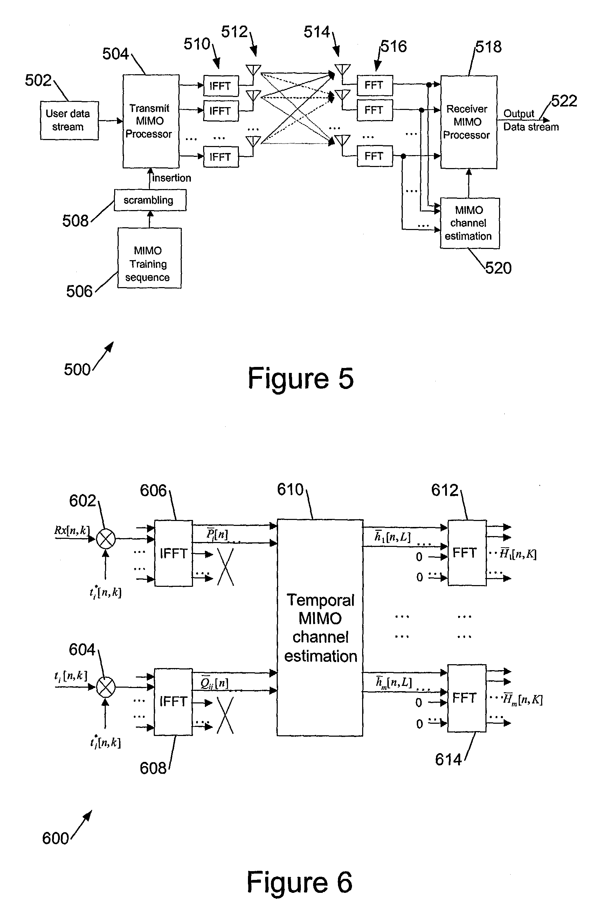

The example of Figure 6 is merely intended to provide some context helpful for understanding the later described invention, and it will be understood that the invention is not limited to an OFDM transmitter using any particular type of coding such as ST encoding. Thus embodiments of the invention, to be described later, may be employed with any MIMO-OFDM system and are not limited to space-time encoded MIMO-OFDM.

As previously mentioned, channel estimation in OFDM is usually performed by transmitting known symbols. Since OFDM can be viewed as a set of parallel flat channels the received signal on each subcarrier is divided by the transmitted pilot symbol to obtain the channel. Broadly speaking, the actual value of the symbols (apart from its power) is irrelevant.

As will be described in more detail with reference to Figure 6 later, channel parameter estimation in an OFDM system may conveniently be performed by transforming received data to the time domain, windowing the data as necessary, and then, in effect, correlating it with training data. In a MIMO OFDM system with $M$ transmitting antennas and a channel length of $L$ there is a need to estimate $LM$ parameters, but, there is also a need to avoid interference between training signals transmitted from different transmit antennas.

Techniques for channel estimation in multiple-antenna OFDM systems are described in Tai-Lai Tung, Kung Yao, R.E. Hudson, "Channel estimation and adaptive power allocation for performance and capacity improvement of multiple-antenna OFDM systems", SPAWC'01 (Taoyuan, Taiwan), pp 82-85, Mar 2001.

Consider a training sequence of length K (in Tung et al., equal to the number of subcarriers) and a channel with an impulse response length or "span" $L$ sample periods $T_s$ where ($T_s$ is the sampling interval of the system and $1/T_s$ the entire channel bandwidth of the OFDM system). The channel span, in terms of time, is $(L\text{-}I)T_s$ and the OFDM frame length $T_s = (K + \nu) \, T_s$ where $\nu$ is the number of cyclic prefix symbols. To avoid ISI normally $\nu \geq L \text{ -}1$ although for the purpose of later described embodiments of the invention prior to channel estimation the length of a channel will not be known and $L$ may therefore be assumed to be equal to the length of the cyclic prefix. In a receiver the channel is modelled as a FIR (Finite Impulse Response) filter with $L$ taps and, again, a sampling interval $T_s$.

The time domain channel impulse response from a transmit antenna, say p, to a receive antenna, say q, of a MIMO system at OFDM symbol, may be denoted **h** [n], or more simply **h**, where $\mathbf{h} = (h_0.....h_{L-1})^T$, a vector of size $L \times 1$. The corresponding frequency response **H** (size K x 1) is given by $\mathbf{H} = \mathbf{F} \, \mathbf{h}$ where **F** is a K x L discrete Fourier transform (DFT) matrix of an $L$ - point sequence producing a $K$ - point DFT sequence. The received signal at a receive antenna is the sum of signals from each transmit antenna, each multiplied by the channel response from the respective transmit antenna to the receive antenna. The vector **H** lies in an $L$ - dimensional subspace and by projecting into it the noise in the estimate of H, can be reduced by a factor of $K/L$ (since white noise has equal power in all dimensions).

Tung et al. (*ibid*) derive the condition for a training sequence in a MIMO OFDM system to be usable to determine a channel estimate (for each transmit-receive antenna channel) with a substantially minimum MSE (mean square error). It turns out that the condition is an orthogonality condition, that is that training sequences transmitted from the transmit antennas are substantially mutually orthogonal, as defined by Equation (1) below. This also ensures that interference between training sequences transmitted from different transmit antennas is mitigated.

$$\mathbf{F}^H \mathbf{X}^{(m)H} \mathbf{X}^{(n)} \mathbf{F} = \begin{cases} \mathbf{0}_L \\ c\mathbf{I}_L \end{cases} \qquad\qquad \text{Equation 1}$$

In Equation (1) $\mathbf{0}_L$ is an all zero matrix of size $L \times L$, $\mathbf{I}_L$ is the identity matrix of size L x L, c is an arbitrary scalar constant, and, m and n are both between 1 and M where M is the number of transmit antennas. The superscript $^H$ denotes a Hermitian conjugation operation. The matrix $\mathbf{X}^{(m)}$ is a diagonal matrix (that is a matrix of zeros except for the diagonal elements), the diagonal elements comprising a training sequence for antenna $m$, that is $\mathbf{X}^{(m)} = diag \, \{X^m{}_1,... X^m{}_k,...X^m{}_k\}$ where $X^m{}_k$ is the $K^{th}$ element of a training sequence of length K (although in Tung et al. k more specifically indexes OFDM subcarriers). It will be recognised that Equation (1) is a condition that the training sequences from antennas $m$ and $n$ are orthogonal unless $m = n$ (a condition on training sequences prior to Fourier transformation since subcarriers are in any case mutually orthogonal in an OFDM system). Details of one least square channel estimation method for a matrix channel of a MIMO system (i.e. for multiple transmit antennas) are given in Tung et al. (see, for example, equation (7)) and hereby incorporated by reference.

Since there are $LM$ parameters to estimate to determine a complete set of channel estimates for the matrix channel between each transmit and each receive antenna the training sequences must (each) be of length $LM$, that is $K \geq LM.$ However the sequences which Tung et al. derive (equation (15)) require $K \geq 2^{M-1}L$ to achieve a minimum MSE for the channel estimates. Thus the required sequence length (or number of subcarriers where each subcarrier carries a training sequence element) grows exponentially with the number of transmitting antennas. This is a potentially severe drawback in MIMO OFDM systems with more then two transmit antennas, and four and eight transmit antennas are planned.

According to a first aspect of the present invention there is therefore provided an OFDM signal transmitted from an OFDM transmitter using a plurality of transmit antennas, the OFDM signal being adapted for channel estimation for channels associated with said transmit antennas by the inclusion of orthogonal training sequence data in the signal from each said antenna, said training sequence data being derived from substantially orthogonal training sequences of length K for each said transmit antenna, said orthogonal training sequences being constructed such that a minimum required sequence length K needed to determine a channel estimate for at least one channel associated with each said transmit antenna is linearly dependent upon the number of said transmit antennas.

Examples of the orthogonal training sequences are described later together with techniques for constructing large numbers of such sequences. The sequences, being orthogonal, meet the criterion set out in Equation (1), which allows the training sequences to be capable of providing substantially minimum mean square error channel estimate for channels from each transmit antenna to one or more receive antennas of an OFDM receiver.

The skilled person will recognize that each training sequence is capable of providing at least one channel estimate, and possibly more than one channel estimate where more than one multipath component is associated with a channel.

The training sequences, which in practice will comprise digital data streams, need not be mathematically exactly orthogonal provided that they are substantially mutually orthogonal.

The training sequence data is based upon the training sequences but may, for example, be derived from scrambled versions of the sequences. The training sequence data may be included in the OFDM signal as one or more OFDM symbols by performing an inverse Fourier transform (IFFT) on a training sequence and then adding a cyclic extension such as a cyclic prefix. Thus the training sequence data may be effectively incorporated in OFDM symbols transmitted from each of the transmit antennas.

Since the training sequences have lengths which grow linearly with the number of transmit antennas the training sequence overhead in MIMO OFDM communication systems may be significantly reduced, in effect allowing shorter training sequences or, equivalently, larger numbers of transmit antennas. In embodiments the sequence length is equal to the product of the number of transmit antennas and an approximate channel length or span, this being the minimum required sequence length.

The orthogonal training sequences may be constructed based upon sequences of values $X^m_k = \exp(j\,2\pi\,k\,m\,L/K)$ where k indexes a value in a said sequence, m indexes a transmit antenna and L is a positive integer. Index k may either run from 1 to K or from 0 to K-1, and similarly m may either run from 1 to M or from 0 to M-1. Integer L is preferable an estimate of the channel length and may be equal to the length of a cyclic extension such as a cyclic prefix of the OFDM signal. Preferably these sequences are scrambled to provide a peak to average power ratio of substantially unity to reduce demands on the transmitter power amplifier. As will be described later there is potentially an infinite number of such scrambling sequences.

The training sequences upon which the training sequence data incorporated in the OFDM signal is based may have values distributed in time and/or frequency space. That is k may index subcarriers of the OFDM signal and/or OFDM symbols. Thus K may run over all the subcarriers of the OFDM signal so that an OFDM training symbol incorporates data for a complete sequence of values, for example each value in a training sequence being carried by one of the subcarriers of the training OFDM symbol. Alternatively training sequence values may be placed, for example, on alternate subcarriers or in some other pattern, or training sequence values may be spaced out in time over two or more OFDM training symbols. In a simplified case, however, K may be equated with the total number of subcarriers and data from one training sequence value placed on each subcarrier. Training sequence values, or scrambled training sequence values, or data derived from such sequences or scrambled sequences may be stored in a look-up table to avoid the need for the values or data to be calculated in real time.

In a related aspect the invention also provides an OFDM signal including training sequence data for channel estimation for a plurality of transmit antennas, said training sequence data being based upon training sequences of length K defined by values of $\exp(j\,2\pi\,k\,m\,L/K)$ where k indexes a value in a said sequence, m indexes a transmit antenna and L is a positive integer.

The invention further provides an OFDM transmitter configured to transmit the above-described OFDM signal, and a data carrier (such as mentioned below) carrying the above-described training sequence data.

The invention also provides an OFDM transmitter having a plurality of transmit antennas, said OFDM transmitter being configured to transmit, from each said transmit antenna, training sequence data based upon a training sequence, said training sequences upon which said training sequence data for said antennas is based being constructed such that:

    i) said training sequences are substantially mutually orthogonal;
    ii) said training sequences allow a receiver to determine a channel estimate for a channel associated with each said transmit antenna; and
    iii) a minimum length of each said training sequence needed to satisfy (ii) is substantially linearly dependent upon the number of transmit antennas.

Preferably the OFDM transmitter is configured to transmit, from each of the transmit antennas, training sequence data based upon a training sequence having values $X^m_k = \exp(j\,2\pi\,k\,mL/K)$ where k indexes a value in a sequence of length K, m indexes a said transmit antenna, and L is a positive integer. The said channel estimate may be a least squares estimate.

Likewise the invention provides an OFDM transmitter having a plurality of transmit antennas, said OFDM transmitter being configured to transmit, from each said transmit antenna, training sequence data based upon a training sequence having values

$$X^m_k = \exp(j\,2\pi\,k\,m\,L/K)$$

where k indexes a value in a sequence of length K, m indexes a said transmit antenna, and L is a positive integer.

The invention also provides an OFDM transmitter configured to transmit an OFDM signal from a plurality of transmit antennas, the OFDM transmitter comprising a data memory storing training sequence data for each of said plurality of antennas; an instruction memory storing processor implementable instructions; and a processor coupled to said data memory and to said instruction memory to read and process said training sequence data in accordance with said instructions, said instructions comprising instructions for controlling the processor to read said training sequence data for each antenna; inverse Fourier transform said training sequence data for each antenna; provide a cyclic extension for said Fourier transformed data to generate output data for each antenna; and provide said output data to at least one digital-to-analogue converter for transmission; and wherein said training sequence data for a said antenna comprises data derived from a sequence of values

$$X^m_k = \exp(j\,2\pi\,k\,mL/K)$$

where m indexes the said antenna, k indexes values in the sequence, L is a positive integer, and wherein the sequence has a length K.

In a related aspect the invention provides a method of providing an OFDM signal from an OFDM transmitter having a plurality of transmit antennas with training sequence data for determining a channel estimate for each of said transmit antennas, the method comprising inserting training sequence data for each said transmit antenna into said OFDM signal, said training sequence data being derived from orthogonal training sequences of length K for each said antenna, said orthogonal training sequences being constructed such that a minimum required sequence length K needed to determine a channel estimate for at least one channel associated with each said transmit antenna is linearly dependent upon the number of said transmit antennas.

The above-described training sequence data and/or processor control code to implement the above-described OFDM transmitters and methods may be provided on a data carrier such as a disk, CD- or DVD-ROM, programmed memory such as read-only memory (Firmware), or on a data carrier such as optical or electrical signal carrier. For many applications embodiments of the above-described transmitters, and transmitters configured to function according to the above-described methods will be implemented on a DSP (Digital Signal Processor), ASIC (Application Specific Integrated Circuit) or FPGA (Field Programmable Gate Array). Thus code (and data) to implement embodiments of the invention may comprise conventional program code, or microcode or, for example, code for setting up or controlling an ASIC or FPGA. Similarly the code may comprise code for a hardware description language such as Verilog (Trade Mark) or VHDL (Very high speed integrated circuit Hardware Description Language). As the skilled person will appreciate such code and/or data may be distributed between a plurality of coupled components in communication with one another.

These and other aspects of the invention will now be further described, by way of example only, with reference to the accompanying figures in which:

Figures 1a and 1b show, respectively, subcarriers of an OFDM signal spectrum, and a conventional OFDM transmitter and receiver;

Figures 2a to 2c show, respectively, an OFDM receiver front end, an OFDM receiver signal processor, and a conceptual illustration of a channel estimation procedure;

Figure 3 shows a time and frequency domain plot of a Hiperlan 2 OFDM signal showing preamble and pilot signal positions;

Figure 4 shows a known space-time coded MIMO OFDM communications system;

Figure 5 shows a MIMO OFDM communications system embodying aspects of the present invention;

Figure 6 shows a block diagram of a channel parameter estimator for a MIMO OFDM receiver;

Figure 7 shows a block diagram of a MIMO OFDM transmitter according to an embodiment of the present invention;

Figure 8 shows a graph of mean square error against signal-to-noise ratio comparing the performance of embodiments of the present invention with prior art techniques for different numbers of transmitter antennas;

Figure 9 shows a graph of mean square error against signal-to-noise ratio comparing embodiments of the present invention against prior art techniques for different numbers of transmitter antennas using a longer training sequence than used for Figure 8; and

Figure 10 shows a graph of mean square error against signal-to-noise ratio comparing the performance of embodiments of the invention with prior art techniques for different training sequence lengths.

Referring again to Equation 1 above, it has been recognised that this equation can be satisfied by training sequences given by Equation 2 below:

$$X_{k,k}^{(m)} = \exp(j2\pi kmL/K), \ 0 \le k \le K\text{-}1, \ 0 \le m \le M\text{-}1 \qquad \text{Equation 2}$$

In Equation 2 m and k run from 0 to M-1 and from 0 to K-1 respectively or, equivalently, from 1 to M and from 1 to K respectively. Index m labels a transmit antenna and values in a training sequence to be transmitted from that antenna are labelled by index k so that a training sequence transmitted by a transmit antenna has a length K. The index k can label subcarriers so that, for example, each value $X_k$ is transmitted on a different subcarrier (in which case K is preferably the total number of subcarriers) or the training sequence values may be distributed in some other way, for example, k labelling alternate subcarriers and the training sequence $X_k$ being distributed over two OFDM symbols, half in one symbol and half in the next. The skilled person will recognise that numerous variations are possible along these lines. It will further be recognised that in effect the length of the training sequence is defined by K.

Where one training sequence value $X_k$ is allocated to each subcarrier an OFDM training symbol for transmission by an antenna of an OFDM transmitter may be constructed by performing an inverse Fourier transform of the K samples or values of a training sequence and then adding a cyclic prefix (conversion to an analogue waveform by a digital-to-analogue converter is understood). The skilled person will recognise that the training sequences may be oversampled, for example by altering the inverse Fourier transform matrix from a K x K matrix to a K x 2K matrix to provide an output data sequence of length of 2K.

In Equation 2 L is a positive integer selected to approximate the channel length in sample periods. However since the length of a channel will not generally be known prior to its estimation L may be taken to be equal to or greater than the cyclic prefix length since the cyclic prefix is normally selected to be longer than the channel.

The training sequences defined by Equation 2 are orthogonal and satisfy an optimality criterion (i.e. minimum MSE) provided that $K \ge ML$. Thus the required sequence length only grows linearly with the number of transmit antennas and hence overcomes the potentially severe limitations of prior techniques when used with more than two transmit antennas. Although the criterion of Equation 1 is known from Tung et al. it has not previously been recognised that training sequences derived from the sequences defined by Equation 2 meet this criterion.

One potential difficulty in using the sequences defined by Equation 2 is that an inverse Fourier transform of a sequence of K values defined by Equation 2 comprises a series of impulse functions in the time domain. This spiky signal requires a large dynamic range for the digital-to-analogue converter (DAC) and has an undesirable peak-to-average power ratio (PAPR). Broadly speaking the lower the PAPR the less stringent the requirements on the DAC and the more efficient the OFDM transmitter. The difficulty can be addressed by scrambling the training sequence in the frequency domain, that is prior to applying an inverse Fourier transform.

The scrambling operation is defined by Equation 3, where the scrambling sequence is $c_k, |c_k| = 1, \forall k$ in which k indexes values in the scrambling sequence.

$$\widetilde{X}_{k,k}^{(m)} = c_k X_{k,k}^{(m)} \qquad \text{Equation 3}$$

There is potentially an infinite number of scrambling sequences with modulus values of one for all k (and all $c_k = 1$ reproduces the original sequence). By choosing a scrambling code sequence appropriately the peak-to-average power ratio can be kept low, which reduces non-linear effects in the communication system and hence improves channel estimation.

Suitable scrambling sequences are described in Leopold Bomer and Markus Antweiler, "Perfect N-phase sequences and arrays", IEEE JSAC, vol 10, no 4, pp 782-789, May 1992, which paper is hereby incorporated by reference. Bomer and Antweiler describe so-called "perfect" sequences and arrays, which have a periodic autocorrelation function and whose out-of-phase values are zero. Time discrete N-phase sequences and arrays have complex elements of magnitude 1 and one of $(2\pi/N)n$, $0 \leq n < N$, different phase values. Bomer and Antweiler describe construction methods for some perfect N-phase sequences and arrays and, for example, the Chu sequences described in their paper can be used to achieve a peak-to-average power ratio of substantially unity.

The construction of Chu sequences of size $S_x$ is described in D.C. Chu, "Polyphase codes with good periodic correlation properties", IEEE Trans. Inform. Theory, vol. IT-25, pp. 720-724, 1979. Chu sequences are constructed using:

$$s(x) = \exp\{j(2\pi/N)n \cdot x^2\} \qquad \text{for } S_x \text{ even}$$

$$s(x) = \exp\{j(2\pi/N)n \cdot x(x+1)\} \qquad \text{for } S_x \text{ odd}$$

$$0 \leq x \leq S_x - 1$$

where n is coprime with $S_x$. The alphabet N of the Chu sequences is given by:

$$N = 2S_x \qquad \text{for } S_x \text{ even}$$

$$N = S_x \qquad \text{for } S_x \text{ odd}$$

With variation of n, this construction generates $\Phi(S_x)$ different perfect N-phase sequences, where $\Phi(\cdot)$ denotes Eulier's totient function.

The construction and use of training sequences derived from Equation 2 will now be illustrated with a simple example.

Consider, for the sake of illustration, a small OFDM system with M=2 transmit antennas, K=4 subcarriers and a channel length of L=2. Then $X_{k,k}^{(m)} = \exp(j2\pi kmL/K) = \exp(j2\pi km/2) = (-1)^{km}$ is equal to $X_{k,k}^{(0)} = \{1,1,1,1\}$ and $X_{k,k}^{(1)} = \{1,-1,1,-1\}$. The 4x2 FFT matrix is

$$F_{kl} = \frac{1}{\sqrt{K}}\exp(-j2\pi kl/K) = \frac{1}{\sqrt{4}}\exp(-j2\pi kl/4) = \frac{1}{2}(-j)^{kl} \text{ and hence } \mathbf{F} = \frac{1}{2}\begin{pmatrix} 1 & 1 \\ 1-j \\ 1-1 \\ 1 & j \end{pmatrix}. \text{ We It}$$

can be seen that the sequences are orthogonal; by applying Equation (1):

$$\mathbf{F}^H\mathbf{X}^{(0)H}\mathbf{X}^{(0)}\mathbf{F} = \frac{1}{2}\begin{pmatrix} 1 & 1 \\ 1-j \\ 1-1 \\ 1 & j \end{pmatrix}^H \begin{pmatrix} 1 & 0 & 0 & 0 \\ 0 & 1 & 0 & 0 \\ 0 & 0 & 1 & 0 \\ 0 & 0 & 0 & 1 \end{pmatrix}\begin{pmatrix} 1 & 0 & 0 & 0 \\ 0 & 1 & 0 & 0 \\ 0 & 0 & 1 & 0 \\ 0 & 0 & 0 & 1 \end{pmatrix}\frac{1}{2}\begin{pmatrix} 1 & 1 \\ 1-j \\ 1-1 \\ 1 & j \end{pmatrix} = \begin{pmatrix} 1 & 0 \\ 0 & 1 \end{pmatrix},$$

$$\mathbf{F}^H \mathbf{X}^{(0)H} \mathbf{X}^{(1)} \mathbf{F} = \frac{1}{2} \begin{pmatrix} 1 & 1 \\ 1-j \\ 1-1 \\ 1 & j \end{pmatrix}^H \begin{pmatrix} 1 & 0 & 0 & 0 \\ 0 & 1 & 0 & 0 \\ 0 & 0 & 1 & 0 \\ 0 & 0 & 0 & 1 \end{pmatrix} \begin{pmatrix} 1 & 0 & 0 & 0 \\ 0 & -1 & 0 & 0 \\ 0 & 0 & 1 & 0 \\ 0 & 0 & 0 & -1 \end{pmatrix} \frac{1}{2} \begin{pmatrix} 1 & 1 \\ 1-j \\ 1-1 \\ 1 & j \end{pmatrix} = \begin{pmatrix} 0 & 0 \\ 0 & 0 \end{pmatrix},$$

$$\mathbf{F}^H \mathbf{X}^{(1)H} \mathbf{X}^{(0)} \mathbf{F} = \frac{1}{2} \begin{pmatrix} 1 & 1 \\ 1-j \\ 1-1 \\ 1 & j \end{pmatrix}^H \begin{pmatrix} 1 & 0 & 0 & 0 \\ 0 & -1 & 0 & 0 \\ 0 & 0 & 1 & 0 \\ 0 & 0 & 0 & -1 \end{pmatrix} \begin{pmatrix} 1 & 0 & 0 & 0 \\ 0 & 1 & 0 & 0 \\ 0 & 0 & 1 & 0 \\ 0 & 0 & 0 & 1 \end{pmatrix} \frac{1}{2} \begin{pmatrix} 1 & 1 \\ 1-j \\ 1-1 \\ 1 & j \end{pmatrix} = \begin{pmatrix} 0 & 0 \\ 0 & 0 \end{pmatrix},$$

$$\mathbf{F}^H \mathbf{X}^{(1)H} \mathbf{X}^{(1)} \mathbf{F} = \frac{1}{2} \begin{pmatrix} 1 & 1 \\ 1-j \\ 1-1 \\ 1 & j \end{pmatrix}^H \begin{pmatrix} 1 & 0 & 0 & 0 \\ 0 & -1 & 0 & 0 \\ 0 & 0 & 1 & 0 \\ 0 & 0 & 0 & -1 \end{pmatrix} \begin{pmatrix} 1 & 0 & 0 & 0 \\ 0 & -1 & 0 & 0 \\ 0 & 0 & 1 & 0 \\ 0 & 0 & 0 & -1 \end{pmatrix} \frac{1}{2} \begin{pmatrix} 1 & 1 \\ 1-j \\ 1-1 \\ 1 & j \end{pmatrix} = \begin{pmatrix} 1 & 0 \\ 0 & 1 \end{pmatrix}.$$

The training sequences in frequency space are $P_k^{(m)} = X_{k,k}^{(m)}$, so the transmitted signals (that is, after IFFT) are

$$p_k^{(m)} = \sum_{l=0}^{K-1} P_l^{(m)} \frac{1}{\sqrt{K}} \exp(j 2\pi k l / K),$$

giving, $p_k^{(0)} = \{2,0,0,0\}$ and $p_k^{(1)} = \{0,0,2,0\}$. As these have a poor peak-to-average power ratio (this is 4), the sequences are preferably scrambled. Using the Chu sequence

$$c_k = \exp(j 2\pi k^2 3/8) = \left\{ 1, \frac{-1+j}{\sqrt{2}}, -1, \frac{-1+j}{\sqrt{2}} \right\},$$

one can create new training sequences

$$\widetilde{X}_{k,k}^{(m)} = c_k X_{k,k}^{(m)}, \text{ that is, } \widetilde{X}_{k,k}^{(0)} = \left\{ 1, \frac{-1+j}{\sqrt{2}}, -1, \frac{-1+j}{\sqrt{2}} \right\} \text{ and } \widetilde{X}_{k,k}^{(1)} = \left\{ 1, \frac{1-j}{\sqrt{2}}, -1, \frac{1-j}{\sqrt{2}} \right\}.$$

Again one can verify that these are orthogonal using Equation (1):

$$\mathbf{F}^H \mathbf{X}^{(0)H} \mathbf{X}^{(0)} \mathbf{F} = \frac{1}{2}\begin{pmatrix} 1 & 1 \\ 1 & -j \\ 1 & -1 \\ 1 & j \end{pmatrix}^H \begin{pmatrix} 1 & 0 & 0 & 0 \\ 0 & \frac{-1-j}{\sqrt{2}} & 0 & 0 \\ 0 & 0 & -1 & 0 \\ 0 & 0 & 0 & \frac{-1-j}{\sqrt{2}} \end{pmatrix} \begin{pmatrix} 1 & 0 & 0 & 0 \\ 0 & \frac{-1+j}{\sqrt{2}} & 0 & 0 \\ 0 & 0 & -1 & 0 \\ 0 & 0 & 0 & \frac{-1+j}{\sqrt{2}} \end{pmatrix} \frac{1}{2}\begin{pmatrix} 1 & 1 \\ 1 & -j \\ 1 & -1 \\ 1 & j \end{pmatrix} = \begin{pmatrix} 1 & 0 \\ 0 & 1 \end{pmatrix}$$

,

$$\mathbf{F}^H \mathbf{X}^{(0)H} \mathbf{X}^{(1)} \mathbf{F} = \frac{1}{2}\begin{pmatrix} 1 & 1 \\ 1 & -j \\ 1 & -1 \\ 1 & j \end{pmatrix}^H \begin{pmatrix} 1 & 0 & 0 & 0 \\ 0 & \frac{-1-j}{\sqrt{2}} & 0 & 0 \\ 0 & 0 & -1 & 0 \\ 0 & 0 & 0 & \frac{-1-j}{\sqrt{2}} \end{pmatrix} \begin{pmatrix} 1 & 0 & 0 & 0 \\ 0 & \frac{1-j}{\sqrt{2}} & 0 & 0 \\ 0 & 0 & -1 & 0 \\ 0 & 0 & 0 & \frac{1-j}{\sqrt{2}} \end{pmatrix} \frac{1}{2}\begin{pmatrix} 1 & 1 \\ 1 & -j \\ 1 & -1 \\ 1 & j \end{pmatrix} = \begin{pmatrix} 0 & 0 \\ 0 & 0 \end{pmatrix}$$

,

$$\mathbf{F}^H \mathbf{X}^{(1)H} \mathbf{X}^{(0)} \mathbf{F} = \frac{1}{2}\begin{pmatrix} 1 & 1 \\ 1 & -j \\ 1 & -1 \\ 1 & j \end{pmatrix}^H \begin{pmatrix} 1 & 0 & 0 & 0 \\ 0 & \frac{1+j}{\sqrt{2}} & 0 & 0 \\ 0 & 0 & -1 & 0 \\ 0 & 0 & 0 & \frac{1+j}{\sqrt{2}} \end{pmatrix} \begin{pmatrix} 1 & 0 & 0 & 0 \\ 0 & \frac{-1+j}{\sqrt{2}} & 0 & 0 \\ 0 & 0 & -1 & 0 \\ 0 & 0 & 0 & \frac{-1+j}{\sqrt{2}} \end{pmatrix} \frac{1}{2}\begin{pmatrix} 1 & 1 \\ 1 & -j \\ 1 & -1 \\ 1 & j \end{pmatrix} = \begin{pmatrix} 0 & 0 \\ 0 & 0 \end{pmatrix}$$

,

$$\mathbf{F}^H \mathbf{X}^{(1)H} \mathbf{X}^{(1)} \mathbf{F} = \frac{1}{2}\begin{pmatrix} 1 & 1 \\ 1 & -j \\ 1 & -1 \\ 1 & j \end{pmatrix}^H \begin{pmatrix} 1 & 0 & 0 & 0 \\ 0 & \frac{1+j}{\sqrt{2}} & 0 & 0 \\ 0 & 0 & -1 & 0 \\ 0 & 0 & 0 & \frac{1+j}{\sqrt{2}} \end{pmatrix} \begin{pmatrix} 1 & 0 & 0 & 0 \\ 0 & \frac{1-j}{\sqrt{2}} & 0 & 0 \\ 0 & 0 & -1 & 0 \\ 0 & 0 & 0 & \frac{1-j}{\sqrt{2}} \end{pmatrix} \frac{1}{2}\begin{pmatrix} 1 & 1 \\ 1 & -j \\ 1 & -1 \\ 1 & j \end{pmatrix} = \begin{pmatrix} 1 & 0 \\ 0 & 1 \end{pmatrix}$$

.

The (scrambled) training sequences in frequency space are $\widetilde{P}_k^{(m)} = \widetilde{X}_{k,k}^{(m)}$, so the transmitted signals (after IFFT) are

$$\widetilde{p}_k^{(m)} = \sum_{l=0}^{K-1} \widetilde{P}_l^{(m)} \frac{1}{\sqrt{K}} \exp\left(j2\pi kl/K\right),$$

now giving,

$$\widetilde{p}_k^{(0)} = \left\{\frac{-1+j}{\sqrt{2}}, 1, \frac{1-j}{\sqrt{2}}, 1\right\} \text{ and } \widetilde{p}_k^{(1)} = \left\{\frac{1-j}{\sqrt{2}}, 1, \frac{-1+j}{\sqrt{2}}, 1\right\}.$$

It can be seen that these scrambled sequences now have a peak-to-average power ratio of 1.

Referring now to Figure 5, this shows an OFDM communications system 500 suitable for use with the above described training sequences. Thus a user data stream 502 is input to a conventional MIMO transmitter processor 504 which provides a plurality of outputs to IFFT blocks 510 each driving a respective one of a set of transmit antennas 512 to transmit a set of OFDM symbols. A MIMO training sequence is provided by block 506, either being constructed as required or being stored, for example in a look-up table. The MIMO training sequence is provided to a scrambling block 508 which applies a scrambling sequence according to Equation 3, and the scrambled training sequence is then inserted in the data stream to be transmitted as OFDM symbols by MIMO processor 504. In practice training sequence and scrambling blocks 506, 508 may comprise temporary or permanent data storage such as Flash RAM or EPROM. Although two separate blocks are shown for clarity, in practice a scrambled training sequence is likely to be precalculated and stored in a local storage medium.

Continuing to refer to Figure 5, each of a plurality of receive antennas 514 receives signals from each of the transmit antennas 512, the received signals being passed to FFT blocks 516 and thence to a conventional MIMO OFDM receiver processor 518, which provides an output data stream 522. Processor 518 also receives a set of MIMO channel estimation values from MIMO channel estimation block 520. Any conventional least square (LS) algorithm may be employed for MIMO channel estimation and embodiments of the invention using the above-described training sequences do not require any modification to a conventional MIMO OFDM receiver (although, as usual, the receiver needs to know the training sequence(s) used). Thus a standard adaptive filter based channel estimation technique may be employed to estimate one or more channels (depending upon the number of receive antennas) for each transmit antenna.

Li et al. (*ibid*) describe one example of a least square channel estimation technique (employing windowing in the time domain), and an outline of this technique is illustrated in Figure 6. For further details of the algorithm reference may be made to the Li et al. paper (hereby incorporated by reference).

In more detail, Figure 6 illustrates a channel parameter estimator 600 having received signal and training data inputs similar to those described above with reference to Figure 4. Thus in Figure 6 the following nomenclature is employed:

$Rx[n,k]$     - Received signal;

$t[n,k]$     - Training sequence;

$\bar{P}[n]$     - Matrix of correlation between received signal and training sequence;

$\bar{Q}[n]$     - Matrix of correlation between training sequences;

$\bar{h}[n,L]$     - Matrix of estimated channel in time domain;

$\bar{H}[n,K]$     - Matrix of estimated channel in frequency domain;

In Figure 6 $i$ labels a transmit antenna and thus multiplier 602 forms a product of the received signal with each (scrambled) training sequence. The result of this operation, performed for the (conjugate of the) training sequence of each transmit antenna, is passed to an IFFT block 606 which provides a time domain data output for each of these training sequences (associated with each transmit antenna) comprising a correlation matrix between the received signal and a respective training sequence. Notionally a set of multipliers 604 (of which only one is shown for clarity) forms a set of products of training sequences transmitted by different transmit antennas and, again, these are translated to the time domain by an IFFT block 608 to provide a set of output matrices $Q_{ij}$. In practice $Q_{ij}$ (or more usefully $\bar{Q}^{-1}$ [n], to avoid a matrix inversion) can be pre-calculated since the transmitted data for the training block is known.

Outputs from IFFT blocks 606, 608 are provided to a MIMO channel estimation block 610, which operates according to a least squares (LS) algorithm to calculate

$$\bar{h}[n,L] = \bar{Q}^{-1}[n]\bar{P}[n]$$

Thus the outputs from channel estimation block 610 comprise a set of (time domain) channel estimates, for each receive antenna one for each of the transmit antennas, and these are provided to sets of FFT blocks 612, 614, of which only two are shown in Figure 6 for clarity. These FFT blocks transform the time domain channel estimates to frequency domain estimates, again one set of estimates (for the set of transmit antennas) for each receive antenna.

As previously explained, to minimise the MSE, the correlation matrix $\bar{Q}[n]$ should be the identity matrix, and this is achieved with the training sequences derived using Equation 2. Thus embodiments of the invention do not require any modification to a conventional receiver.

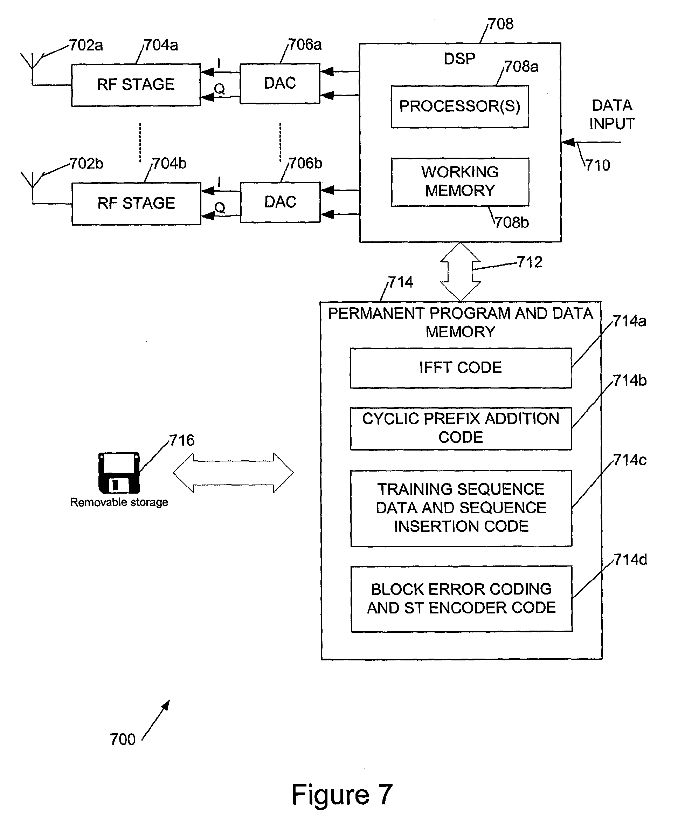

Figure 7 shows an example of an OFDM transmitter 700 configured to use training sequences according to embodiments of the present invention. Broadly speaking the majority of the signal processing is performed in the digital domain, conversion to analogue signals only taking place for the final RF stages.

In Figure 7 two transmit antennas 702a,b are driven by respective RF stages 704a,b, typically comprising an up-converter, power amplifier and, optionally, windowing filters. The RF stages are driven by I and Q outputs of respective digital-to-analogue converters 706a,b which receive inputs from a digital signal processor (DSP) 708. Digital data for transmission is provided on an input 710 to DSP 708.

DSP 708 will generally include one or more processors 708a and working memory 708b, and has a data, address and control bus 712 to couple the DSP to permanent program and data memory 714, such as Flash RAM or ROM. Memory 714 stores processor control code for controlling DSP 708 to provide OFDM functions, in particular IFFT code 714a, cyclic prefix addition code 714b, training sequence insertion code 714c, and block error (such as Reed-Solomon) correction and ST encoding code 714d. Memory 714 also stores training sequence data, here with sequence insertion code 714c, for inclusion in OFDM symbols transmitted from antennas 702a,b for channel estimation by a complementary OFDM receiver. As illustrated, some or all of the data and/or code stored in memory 714 may be provided on a removable storage medium 716 or on some similar data carrier. Although only two transmit antennas are shown in Figure 7 the skilled person will recognise that in practice more transmit antennas, such as 4, 6 or 8 antennas may be employed.

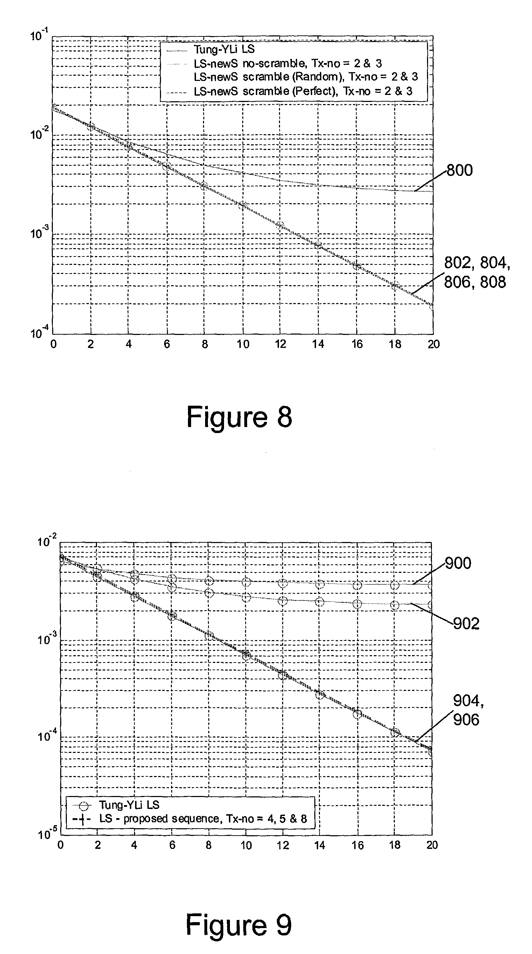

Figures 8, 9 and 10 show graphs illustrating comparisons of the performance of the above-described training sequences with conventional training sequences for least squares algorithms, in particular those described in Tung et al. and Li et al (*ibid*).

Figure 8 shows a graph of mean square error (MSE) on the y-axis against received signal-to-noise ratio (S/N) in dB for systems with two and three transmit antennas. In the graph of Figure 8 an FFT size of 52 is assumed, corresponding to existing global WLAN OFDM systems such as Hiperlan/2 (in Europe), IEEE 802.11 a (in the USA), and HiSWAN (in Japan). In these standards the FFT size is 64 but only 52 subcarriers are available for data transmission (including user data and pilot sequences) and therefore, for a fair comparison, an FFT size of 52 has been assumed in Figure 8. The multipath channel is assumed to have the same span as the defined period of cyclic prefix (CP), that is 15 sampling periods, to avoid inter-symbol interference (ISI).

In Figure 8 curves 802, 804, 806 and 808 correspond to, respectively, the application of a MIMO technique with a conventional training sequence for an LS algorithm according to Tung and Li with two transmit antennas; a training sequence according to Equation 2 above without scrambling, with both two and three transmit antennas; a training sequence according to Equation 2 above with a random scrambling process with both two or three transmit antennas; and a training sequence according to Equation 2 above with a so-called "perfect" scrambling sequence according to Bomer and Antweiler (*ibid*) for both two and three transmit antennas. Curve 800 shows the performance of a conventional training sequence in an MIMO system according to Tung and Li with three transmit antennas. Curves 802, 804, 806 and 808 substantially correspond but curve 800 shows a significant residual mean square error, illustrating that conventional techniques (as described in Tung and Li) are only able to support two transmit antennas whereas the above-described techniques can support, in this case, three transmit antennas.

Figure 9 shows a second graph of mean square error on the y-axis against signal-to-noise ratio (in dB) on the x-axis, in this case for a fixed length of training sequence (K = 128) and for 4, 5 and 8 transmit antennas. Curves 904, 902 and 900 show, respectively, the performance for a conventional scheme with 4, 5 and 8 transmit antennas whereas curve 906 shows the performance of a training sequence according to Equation 2 above (either with or without scrambling) also for 4, 5 and 8 transmit antennas. It can be seen that the conventional scheme can only support up to four transmit antennas ($2^{4-1}*16$) whereas the proposed scheme can support up to 8 transmit antennas ($8*16$).

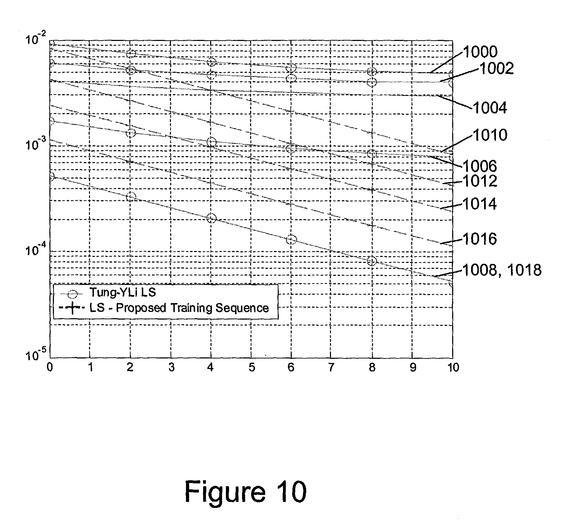

Figure 10 shows the effect of varying the training sequence length, again with mean square error on the y-axis and signal-to-noise ratio (in dB) from the x-axis. The curve of Figure 10 relates to a system with eight transmit antennas and an assumed channel length of 16. Curves 1000, 1002, 1004, 1006 and 1008 relate to training schemes according to the prior art with sequence lengths of, respectively, 128, 256, 512, 1024, and 2048. Curves 1010, 1012, 1014, 1016, and 1018 relate to training sequences derived on the basis of Equation 2 above with respective training sequence length of 128, 256, 512, 1024, and 2048. It can be seen that in order to achieve a reasonable performance (say a mean square error of better than around $10^{-3}$ at 10dB S/N) a training sequence of only 128 is required whereas a conventional scheme needs a training sequence length of 1024 or 2048, which presents a significant disadvantage.

The above-described technology is useful for OFDM communications systems with multiple transmit antennas such as MIMO systems. The technology is applicable to both terminals and base stations or access points and is not limited to any of the existing standards employing OFDM communication. With conventional techniques for use with least square channel estimation (which is simple and provides good performance) the required training sequence length is $K \geq 2^{M-1} L$ and grows exponentially with the number of antennas whereas with the above described techniques the required sequence length is $K \geq ML$ and is linearly proportional to the number of transmit antennas. The above described techniques can also provide a peak-to-average power ratio of close to unity, which enables the use of OFDM transmitter power amplifiers with a reduced specification.

No doubt many other effective alternatives will occur to the skilled person. It will be understood that the invention is not limited to the described embodiments and encompasses modifications apparent to those skilled in the art lying within the spirit and scope of the claims appended hereto.

**Claims**

1.  An OFDM signal transmitted from an OFDM transmitter using a plurality of transmit antennas, the OFDM signal being adapted for channel estimation for channels associated with said transmit antennas by the inclusion of orthogonal training sequence data in the signal from each said antenna, said training sequence data being derived from substantially orthogonal training sequences of length K for each said transmit antenna, said orthogonal training sequences being constructed such that a minimum required sequence length K needed to determine a channel estimate for at least one channel associated with each said transmit antenna is linearly dependent upon the number of said transmit antennas.

2.  An OFDM signal as claimed in claim 1 wherein said orthogonal training sequences are constructed based upon sequences of values

$$X^m_k = \exp(j\,2\pi\,k\,m\,L/K)$$

where k indexes a value in a said sequence, m indexes a transmit antenna, L is a positive integer, and K is the length of a said sequence.

3.  An OFDM signal as claimed in claim 2 wherein said orthogonal training sequences are based upon scrambled versions of said sequences of values $X^m_k$.

4.  An OFDM signal as claimed in claim 3 wherein portions of said OFDM signal including said training sequence data have a peak-to-average power ratio of substantially unity.

5.  An OFDM signal as claimed in claim 2, 3 or 4 wherein said index k indexes subcarriers of said OFDM signal.

6.  An OFDM signal as claimed in claim 2, 3, 4 or 5 wherein said index k indexes OFDM symbols of said OFDM subcarrier.

7.  An OFDM signal as claimed in any one of claims 2 to 6 wherein L is equal to the length of a cyclic extension of said OFDM signal in sample periods.

8.  An OFDM signal including training sequence data for channel estimation for a plurality of transmit antennas, said training sequence data being based upon training sequences of length K defined by values of $\exp(j\,2\pi\,k\,m\,L/K)$ where k indexes a value in a said sequence, m indexes a transmit antenna and L is a positive integer.

9.  An OFDM transmitter configured to transmit the OFDM signal of any one of claims 1 to 8.

10. An OFDM data transmission system comprising the transmitter of claim 9 and an OFDM receiver configured to receive the OFDM signal.

11. A data carrier carrying training sequence data as defined in any one of claims 1 to 8 for a set of said transmit antennas.

12. An OFDM transmitter having a plurality of transmit antennas, said OFDM transmitter being configured to transmit, from each said transmit antenna, training sequence data based upon a training sequence, said training sequences upon which said training sequence data for said antennas is based being constructed such that:

    i) said training sequences are substantially mutually orthogonal;
    ii) said training sequences allow a receiver to determine a channel estimate for a channel associated with each said transmit antenna; and
    iii) a minimum length of each said training sequence needed to satisfy (ii) is substantially linearly dependent upon the number of transmit antennas.

**13.** An OFDM transmitter having a plurality of transmit antennas, said OFDM transmitter being configured to transmit, from each said transmit antenna, training sequence data based upon a training sequence having values

$$X^m_k = \exp(j\, 2\pi\, k\, m\, L/K)$$

where k indexes a value in a sequence of length K, m indexes a said transmit antenna, and L is a positive integer.

**14.** An OFDM transmitter as claimed in claim 12 or 13 wherein said training sequence data is based upon scrambled versions of said training sequences.

**15.** An OFDM transmitter as claimed in claim 14 wherein said scrambled versions of said training sequences are selected to provide a peak-to-average ratio of transmitted power of approximately one.

**16.** An OFDM transmitter as claimed in claims 12, 13, 14 or 15 configured to transmit an OFDM signal with K subcarriers.

**17.** Processor control code and training sequence data to, when running, implement the OFDM transmitter of any one of claims 9 and 12 to 16.

**18.** A carrier carrying the processor control code and data of claim 17.

**19.** An OFDM transmitter configured to transmit an OFDM signal from a plurality of transmit antennas, the OFDM transmitter comprising:

a data memory storing training sequence data for each of said plurality of antennas;
an instruction memory storing processor implementable instructions; and
a processor coupled to said data memory and to said instruction memory to read and process said training sequence data in accordance with said instructions, said instructions comprising instructions for controlling the processor to:

read said training sequence data for each antenna;
inverse Fourier transform said training sequence data for each antenna;
provide a cyclic extension for said Fourier transformed data to generate output data for each antenna; and
provide said output data to at least one digital-to-analogue converter for transmission; and
wherein said training sequence data for a said antenna comprises data derived from a sequence of values

$$X^m_k = \exp(j\, 2\, \pi\, k\, m\, L/K)$$

where m indexes the said antenna, k indexes values in the sequence, L is a positive integer, and wherein the sequence has a length K.

**20.** An OFDM transmitter as claimed in claim 19 wherein said training sequence data is based upon a scrambled sequence of values $c_k\, X^m_k$ where $c_k$ denotes a value in a scramble sequence indexed by k.

**21.** A data carrier carrying the training sequence data for each antenna of claim 19 or 20.

**22.** A data carrier as claimed in claim 21 further comprising said processor implementable instructions.

**23.** A method of providing an OFDM signal from an OFDM transmitter having a plurality of transmit antennas with training sequence data for determining a channel estimate for each of said transmit antennas, the method comprising:

inserting training sequence data for each said transmit antenna into said OFDM signal, said training sequence data being derived from orthogonal training sequences of length K for each said antenna, said orthogonal training sequences being constructed such that a minimum required sequence length K needed to determine a channel estimate for at least one channel associated with each said transmit antenna is linearly dependent upon the number of said transmit antennas.

**24.** A method as claimed in claim 23 further comprising retrieving said training sequence data from a training sequence data store.

**25.** A method as claimed in claim 23 or 24, wherein said orthogonal training sequences are based upon sequences of values of length K.

$$X^m_k = \exp(j\,2\pi\,k\,m\,L/K)$$

where k indexes a value in a said sequence, m indexes a transmit antenna and L is a positive integer.

**26.** A method as claim in claim 25 wherein said orthogonal training sequences are based upon scrambled versions of said sequences of values $X^m_k$.

**27.** A method as claimed in claim 26 wherein portions of said OFDM signal including said training sequence data have a peak-to-average power ratio of substantially unity.

**28.** A data carrier carrying training sequence data for each said transmit antenna as recited in any one of claims 23 to 27.

Fig. 1a
(PRIOR ART)

Fig. 1b
(PRIOR ART)

Fig. 2a
(PRIOR ART)

Fig. 2b
(PRIOR ART)

EP 1 414 177 A1

Fig. 3

274

Training Signal 272 → Channel 274 → 276

282 + / -

278

Channel Estimate 278 → 280

284

error

270

# Figure 2c
## (PRIOR ART)

404 406 408 410 412 414 416 418

402 → **Space-Time Encoder** 404 → IFFT 406 → RF 408 → ... → RF 412 → FFT 414 → **Decoder** 418 → 422

IFFT → RF → RF → FFT

CSI 420

420

ST CODER 421

421

400

# Figure 4
## (PRIOR ART)

Figure 5

Figure 6

Figure 7

## Figure 8

## Figure 9

Figure 10

European Patent Office

Application Number

EP 03 25 5881

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | LI Y: "SIMPLIFIED CHANNEL ESTIMATION FOR OFDM SYSTEMS WITH MULTIPLE TRANSMIT ANTENNAS" IEEE TRANSACTIONS ON WIRELESS COMMUNICATIONS, IEEE, PISCATAWAY, US, vol. 1, no. 1, January 2002 (2002-01), pages 67-75, XP001143806 ISSN: 1536-1276 * section III * ----- | 1-28 | H04L1/06 H04L25/02 H04L27/26 |
|  |  |  | TECHNICAL FIELDS SEARCHED (Int.Cl.7) |
|  |  |  | H04L |

The present search report has been drawn up for all claims

| Place of search | Date of completion of the search | Examiner |
|---|---|---|
| THE HAGUE | 1 March 2004 | Orozco Roura, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.............................................................................
& : member of the same patent family, corresponding document

EPO FORM 1503 03.82 (P04C01)